# EUROPEAN PATENT APPLICATION

(11) **EP 4 620 715 A1**
(43) Date of publication of application: **24.09.2025**
(21) Application number: 24165574.5
(22) Date of filing: 22.03.2024
(51) Int. Cl.: B60L 3/00, B60L 9/18, B60L 50/53

(54) **ELECTRIC VEHICLE SYSTEM**

(71) Applicant: Scania CV AB, 151 87 Södertälje (SE); vancom GmbH & Co. KG, 76829 Landau (DE)
(72) Inventor: Zeyen, Michael, 76829 Landau (DE); Thoren, Christer, 15187 Södertälje (SE)
(74) Representative: Eichelhardt, Frank Robert

(57) **Abstract**

Electric vehicle system (10) comprising:
- a functional unit (11) configured to provide at least one electrical function, in particular a DC/DC-converter (16), the functional unit (11) being electrically floating and having at least one voltage reference point (13); and
- a safety unit (34) configured for actively matching an electric potential (Vᵣ) at the voltage reference point (13) to a target value (V₀), the safety unit (34) being configured to trigger an insulation fault event if the matching is impossible.

## Description

The invention pertains to an electric vehicle system according to claims 1 and 2, an electric vehicle according to claim 15 and a method for operating an electric vehicle system according to claim 16.

Electric road systems (ERS) enable street vehicles like ERS-trucks and/or ERS-busses to power their electric drive train and/or charge their vehicle battery while driving. Some ERS feature overhead contact lines providing electrical power that can be picked up by the street vehicles' current collector.

Similar solutions are already in use in electric railway systems for a long time. However, contrary to electric trains, whose chassis is permanently grounded via their metallic wheels and rails, ERS-vehicles run on rubber tires, so that their chassis is not or only insufficiently grounded with a very high grounding resistance. In case of an insulation fault there is the risk of a high voltage between the chassis and ground, which could lead to hazardous situations.

One possible solution is to add a grounded line to the overhead lines, which, however, increases complexity and installation costs. Another possibility is a double insulation around parts of the ERS-vehicle that are connected to the overhead lines and introduce an intermediate safety layer. Yet, this also increases complexity and costs as well as a total vehicle weight and, furthermore, requires additional installation space.

An objective of the invention is, in particular but not limited to, advantageously improving an electric vehicle system and/or an electric vehicle, in particular regarding operational safety, structural complexity, size requirement, weight and/or costs. According to the invention, the objective is achieved by the features of claims 1, 2, 15 and 16, while advantageous embodiments and further developments of the invention can be taken from the dependent claims.

One aspect of the invention concerns an electric vehicle system comprising:
- a functional unit configured to provide at least one electrical function, the functional unit being electrically floating in particular to ground and having at least one voltage reference point; and
- a safety unit configured for actively matching an electric potential at the voltage reference point to a target value, the safety unit being configured to trigger an insulation fault event if the matching is impossible, in particular even taking into account an acceptable deviation.

A further aspect of the invention pertains to an electric vehicle, in particular an ERS-truck and/or an ERS-bus, comprising or being part of said electric vehicle system.

Additionally, a further aspect of the invention relates to a method for operating an electric vehicle system, wherein a functional unit providing at least one electrical function is electrically floating and has at least one voltage reference point, wherein an electric potential at the voltage reference point is actively matched to a target value, and wherein an insulation fault event is triggered if the matching is impossible.

By the invention safety of an electric vehicle system and/or an electric vehicle can be advantageously improved. In particular, an operational safety can be improved. Harmful voltages at a vehicle chassis of the electric vehicle system and/or the electric vehicle relative to ground can be prevented so that touching of the vehicle chassis remains safe for human beings in all conditions. Furthermore, a structural complexity, size requirements, weight and/or costs can be reduced, in particular since at least one insulation layer can be omitted, wherein high safety standards can still be retained.

The electric vehicle system may be part of an electric vehicle. Alternatively, the electric vehicle system may comprise an electric vehicle, in particular in addition to further units. The electric vehicle has at least one electric motor and may have an additional internal combustion engine and/or fuel cell. The electric vehicle and/or the electric vehicle system may comprise a rechargeable vehicle battery, which may be configured to power the electric motor and/or an on-board electrical system of the electric vehicle, comprising, for example, a drive control system, an onboard computer, an entertainment system, a satellite navigation system and/or an air-conditioning system The vehicle battery may have a voltage rating from 60 V to 2000 V, preferably from 400 V to 800 V. The vehicle may be a car or preferably a truck and/or a bus, preferably an ERS-truck and/or an ERS-bus.

The functional unit may be any electrical unit considered useful by the person skilled in the art. It may, for example, be configured for converting a voltage and/or an electric current. The provided function could, by way of example, be a rectification, an inversion, a boosting and/or a reduction of a voltage and/or an electric current.

The functional unit may be a symmetrical DC/DC-converter, in particular a non-isolated symmetrical DC/DC-converter.

The functional unit may be electrically floating in the sense of at least its output side being disconnected from, in particular not being connected to, a reference potential, in particular a ground potential, at least temporarily and preferably permanently, which may allow variably setting of the electric potential at the voltage reference point.

In operation, the safety unit tries to match the electric potential at the voltage reference point to the target value. As long as the safety unit succeeds in keeping a difference between the electric voltage at the reference point and the target value below or at least at one safety threshold, a normal operation condition may persist. If the safety unit fails to keep the difference below or at the safety threshold, the safety unit triggers the insulation fault event, which in turn may trigger further safeguarding actions and/or protective measures. The safety unit may fail in matching the electric potential at the voltage reference point to the target value if the difference exceeds the safety threshold.

An insulation fault, which may be potentially hazardous, triggering the insulation fault event may occur between an electrically active element, for example an electric line and/or an electric component, of the electric vehicle system and a structural part, in particular a vehicle chassis, of the electric vehicle system and/or the electric vehicle. Touching the structural part, in particular the vehicle chassis, could potentially be harmful in the event of an insulation fault. The safety unit may be configured to detect such insulation fault events and trigger further safeguarding actions and/or protective measures.

According to another aspect of the invention, which can be considered on its own or in combination with further aspects of the invention, the electric vehicle system may comprise:
- a voltage input unit configured to be connected to a bi-polar, preferably symmetrical, DC input voltage;
- a voltage output unit configured to supply a DC output voltage which is different from the DC input voltage; and
- a symmetrical DC/DC-converter, in particular the abovementioned symmetrical DC/DC-converter, electrically connected between the voltage input unit and the voltage output unit for converting the DC input voltage to the DC output voltage.

Through this a very fast disconnection of both voltage supply lines is possible, preferably within preferably within a few milliseconds. Furthermore, very large voltage differences between the DC input voltage and the DC output voltage can be handled. The use of a symmetrical DC input voltage helps to lower insulation requirements.

The DC input voltage being "bi-polar" is to mean that a first line of the electric vehicle system has a positive potential with respect to a reference potential and a second line of the electric vehicle system has a negative potential with respect to the reference potential, wherein the sum of the absolute values of the positive potential and the negative potential equals the DC input voltage. Therein, neither the positive potential nor the negative potential is zero. The DC input voltage is "symmetrical" if the absolute value of the positive potential equals the absolute value of the negative potential. The positive potential may be between 250 V and 1500 V, in particular between 500 V and 875 V. The negative potential may be between -1500 V and -250 V, in particular between -875 V and -500 V. The DC input voltage could be between 500 V and 3000 V, in particular between 1250 V and 1750 V.

The electric vehicle system may comprise a power supply unit configured to provide the bi-polar, preferably symmetrical, DC input voltage. The power supply unit may, in particular at least partially, be part of the electric vehicle and may comprise, for example, a high voltage fuel cell and/or a high voltage battery. The power supply unit may as well be, in particular at least partially, a unit separate from the electric vehicle and may comprise, for example, an overhead contact line power system, a vehicle charging station, an ERS, a high voltage fuel cell and/or a high voltage battery.

The overhead contact line power system may comprise an overhead contact line system and a contact line power station for supplying the overhead contact line system. The overhead contact line system may comprise a first contact line and a second contact line. The contact line power station may deliver the bi-polar and preferably symmetrical DC input voltage to the first contact line and the second contact line. The first contact line may have a positive electric potential with respect to the reference potential, in particular the ground potential, whereas the second contact line may have a negative electric potential with respect to the reference potential, in particular the ground potential, preferably with the same absolute value as the first contact line.

In case of the power supply unit being a unit separate from the electric vehicle the bipolar and preferably symmetrical DC input voltage may be provided by a high resistance grounding, for example by connecting a first outlet of a voltage supply of the power supply unit, in particular of the contact line power station, to the ground potential via a first grounding resistor and connecting a second outlet of the voltage supply, in particular of the contact line power station, to the ground potential via a second grounding resistor. If the first resistor and the second resistor are equal, the DC input voltage will be symmetrical. The first resistor and/or the second resistor may have an electrical resistance which is suitable to reduce the fault current in case of an earth fault to an acceptable level. The electrical resistance of the first resistor and/or the second resistor maybe, for example, 2 kΩ or 4 kΩ.

The functional unit may be embodied as the symmetrical DC/DC-converter. The symmetrical DC/DC-converter is configured to convert the DC input voltage received at the voltage input unit into the DC output voltage provided at the voltage output unit. Preferably, the DC output voltage is, in terms of absolute values, lower than the DC input voltage. The DC output voltage may be, for example, at least 100 V, in particular at least 400 V, and/or at most 1000 V, in particular at most 800 V. The DC output voltage may be provided for charging the vehicle battery.

The symmetrical DC/DC-converter may preferably be a non-isolated symmetrical DC/DC-converter. The non-isolated symmetrical DC/DC-converter may be any type of non-isolated symmetrical DC/DC-converter deemed to be useful by the person skilled in the art, for example a step-up or boost converter or preferably a step down or buck converter. The DC/DC-converter may be "non-isolated" in the sense that it lacks a transformer. The DC/DC-converter may be "symmetrical" with respect to both its electric input leads and both its electric output leads. The DC/DC-converter may be bi-polar, in particular in order to allow energy to flow back to the power supply unit. The DC/DC-converter may also be inverting or preferably be non-inverting.

The DC/DC-converter may comprise at least one first switching element and at least one second switching element, which together allow a complete electrical separation of an output side of the DC/DC-converter from an input side of the DC/DC-converter. The first switching element and/or the second switching element may be a solid-state switching element, for example a metal-oxide-semiconductor field-effect transistor (MOSFET) or an insulated-gate bipolar transistor (IGBT).

The DC/DC-converter may comprise a first inductance and a second inductance electrically located between the two electric input leads on an input side and the two electric output leads at an output side. Each of the inductances may electrically be located between one of the switching elements and the output side. Inductance values of the inductances are equal. The inductance value of the inductances may be, for example, between 50 µH and 1000 µH, preferably 200 µH. Due to the inductances in both lines the output side of the DC/DC-converter may be floating and an electric potential at a voltage reference point at the output side may be variably set.

The DC/DC-converter may comprise stabilizing capacitors between the two electric input leads and the two electric output leads. The capacitance of the capacitors may be equal and may be between 10 µF and 2000 µF, preferably 100 µF.

The DC/DC-converter may comprise a diode electrically connected between the inductances and or the switching elements. The diode may be electrically connected in parallel to the stabilizing capacitors. The diode may be oriented so that it is non-conducting if both switching elements are closed.

In operation the first switching element may be opened and/or closed simultaneously with the second switching element. In a closed state of the switching elements an electric current may flow through the first switching element, the first inductance, the second inductance and the second switching element. If both switching elements are then opened, the electric current may continue flowing through the first inductance, the second inductance and the diode. This may lead to the DC output voltage being lower than the DC input voltage.

Alternatively, the DC/DC-converter may comprise a further switching element instead of the diode, which may also be embodied as a solid-state switching element, for example a MOSFET or an IGBT. In operation, the further switching element may be opened and/or closed alternatingly to the first switching element and the second switching element, in particular for allowing energy transfer from the vehicle battery to the power supply unit.

That the DC/DC-converter is "electrically connected between" the voltage input unit and the voltage output unit shall also include embodiments where the DC/DC-converter is electrically connected to the voltage input unit and/or the voltage output unit via a further unit of the electric vehicle system.

The voltage input unit may be configured to provide an earth potential, whereby a target value for the active matching can advantageously be provided. The earth potential could, for example, be provided by an electric line connecting the voltage input unit with the ground potential of a ground.

In some embodiments the voltage input unit may comprise an input voltage divider, preferably a symmetrical input voltage divider, configured to provide the earth potential as a virtual earth potential. Thus, an electric line connecting the voltage input unit to the ground potential can be omitted. Furthermore, in overhead contact line power systems a ground line is unnecessary, thus reducing installation costs.

In order to make sure that the virtual earth potential essentially equals the ground potential, a ratio of the first input divider resistor of the input voltage divider and a second input divider resistor of the input voltage divider may be equal to a ratio of the first grounding resistor and the second grounding resistor. In case of a symmetrical DC input voltage the electrical resistance of the first input divider resistor and the second input divider resistor is the same. The first input divider resistor and/or the second input divider resistor may have an electrical resistance from 1 MΩ and 10 MΩ.

The voltage output unit may comprise a chassis ground potential setting unit for variably setting a chassis ground potential. Thereby, operational safety can be increased since the safety unit may use the chassis ground potential as the electric potential at the voltage reference point.

The chassis ground potential may be a potential at a chassis, in particular a vehicle chassis, of the electric vehicle system and/or the electric vehicle. The chassis, in particular the vehicle chassis, could have at least one surface that may be accessible and/or touchable by a person.

The chassis ground potential setting unit may, for example, comprise two current sources in series for variably setting the chassis ground potential. In some embodiments the chassis ground potential setting unit may comprise a variable output voltage divider whose center tab is connected to the chassis ground potential. Thus, a simple construction can be achieved.

The variable output voltage divider may comprise a first output divider resistor and a second output divider resistor. One or preferably both of the output divider resistors may be variable. The first output divider resistor and/or the second output divider resistor may be embodied as variable ohmic resistor. Alternatively, one or both of the output divider resistor may be implemented using at least one switch for the variable output divider resistor. This switch may be a solid-state switch. A switching duty cycle of the switch may be used to set an equivalent electrical resistance.

The center tab may be the voltage reference point whose electric potential may be matched to the target value by the safety unit. In some embodiments the electric potential at the voltage reference point may be the chassis ground potential and the target value may be the earth potential, whereby operational safety can be most advantageously increased.

In an advantageous embodiment the safety unit may be configured to match the chassis ground potential to the virtual earth potential by controlling the chassis ground potential setting unit, preferably the variable output voltage divider and most preferably the duty cycles of the abovementioned switches. Thus, operational safety can be most advantageously increased as a voltage difference between the chassis ground potential and the ground potential, which equals the virtual earth potential, can be retained within a safe margin.

For matching the chassis ground potential to the virtual earth potential, the safety unit may comprise a balancing unit, in particular an analog balancing circuit. Alternatively, the matching may be monitored and/or conducted by a microcontroller driven unit.

The safety unit may be configured to interrupt an electrical connection between the voltage input unit and the voltage output unit if the difference between the earth potential and the chassis ground potential exceeds at least one safety threshold. Thereby, hazardous potential differences between the ground potential and the chassis can advantageously be prevented, in particular in case of an insulation fault.

If the difference between the earth potential and the chassis ground potential exceeds at least one safety threshold, matching of the electric potential at the voltage reference point to the target value was impossible and the insulation fault event is triggered. Interrupting the electrical connection between the voltage input unit and the voltage output unit may be the safeguarding action and/or protective measure taken following the insulation fault event.

For determining whether the safety threshold is exceeded, the safety unit may comprise a comparator circuit for comparing the earth potential and the chassis ground potential. Alternatively, the comparison may be conducted by the abovementioned microcontroller unit.

It would be conceivable to define different safety thresholds for different internal or external conditions of the electric vehicle. An internal condition of the electric vehicle could be, for example, a movement state of the vehicle, i.e. whether the vehicle is stationary or whether it moves, and, if it moves, at what speed. The safety threshold may be lowest for the stationary vehicle, as the vehicle could easily be touched in this state. The safety threshold may be higher if the vehicle moves. Additionally, the safety threshold may be dependent on the movement speed of the vehicle. An external condition of the electric vehicle could be, for example, an ambient condition, e.g. a humidity level in the vicinity of the vehicle. For a higher humidity level, the safety threshold may be lower, whereas for a lower humidity level the safety threshold may be higher.

The safety threshold or the safety thresholds should be chosen so to prevent any hazardous conditions when touching the chassis. An electric current through a body touching the chassis and standing on the ground should be sufficiently low and/or should only occur during a sufficiently short period of time. The safety threshold could, for example, be 30 V.

In some embodiments the safety unit may be configured to open at least one switching element of the DC/DC-converter, preferably the first switching element and the second switching element, most preferably simultaneously, in order to interrupt the electrical connection. Thus, a very quick disconnection, in particular within a few milliseconds, between the voltage input unit and the voltage output unit can be realized, in particular as the first switching element and the second switching element may be solid-state switching elements like MOSFETs and/or IGBTs.

The electric vehicle system may further comprise a disconnection unit electrically connected between the voltage input unit and the DC/DC-converter, wherein the safety unit may be configured to open at least one disconnector of the disconnection unit in order to interrupt the electrical connection. Thereby, safety may be further enhanced since a permanent disconnection between the voltage input unit and the voltage output unit in case of an insulation fault can be realized.

Advantageously, the disconnection unit may comprise a first disconnector configured to disconnect a first line voltage of the voltage input unit and a second disconnector configured to disconnect a second line voltage of the voltage input unit. The disconnectors may be normally open (NO) disconnectors to further enhance operational safety. The disconnectors may be relays or contactors.

The devices, systems and methods disclosed herein are not intended to be limited to the application and embodiment described above. In particular, they may have a number of individual elements, components and units as well as process steps deviating from a number specified herein in order to fulfill a mode of operation described herein. In addition, in the case of value ranges specified in this disclosure, values lying within the specified limits are also to be regarded as disclosed.

In particular, it is pointed out that all features, properties and methods described in relation to a device are transferable mutatis mutandis to methods and can be used in the sense of the invention and are deemed to be co-disclosed. The same applies in the opposite direction. This means that structural, i.e. device-related, features mentioned in relation to methods can also be taken into account and claimed within the scope of device claims and can also be counted as part of the disclosure.

In the following, the present invention is described by way of example with reference to the accompanying figures. The drawing, the description and the claims contain numerous features in combination. The skilled person will also usefully consider the features individually and use them sensibly in combination in the context of the claims.

If there is more than one example of a particular object, only one of them may be provided with a reference sign in the figures and in the description. The description of this specimen can be transferred accordingly to the other specimens of the object. If objects are named in particular by means of numerical words, such as first, second, third object, etc., these are used to name and/or assign objects. Accordingly, for example, a first object and a third object, but no second object, can be included. However, a number and/or sequence of objects could also be derived from numerical words.

Preferred embodiments of the invention are explained in greater detail below with reference to the appended schematic drawings, which show the following:
- Fig. 1: a schematic drawing of an electric vehicle system comprising an electric vehicle and a power supply unit, the power supply unit having an overhead contact line power system and a vehicle charging station;
- Fig. 2: a circuit diagram of parts of the electric vehicle system;
- Fig. 3: a circuit diagram of a non-isolated symmetrical DC/DC-converter of the electric vehicle system; and
- Fig. 4: a flow diagram of a method for operating the electric vehicle system.

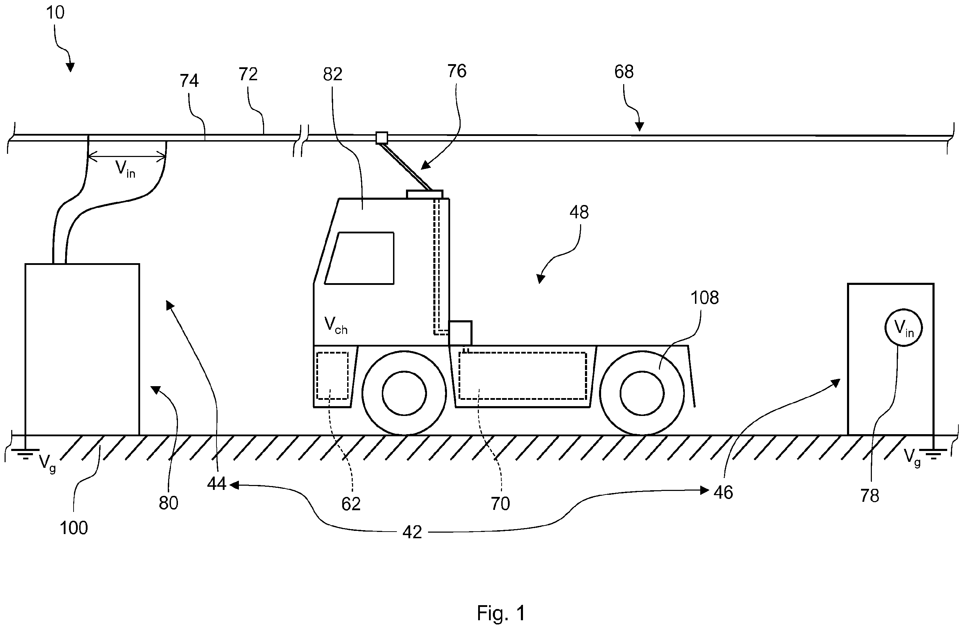

Figure 1 shows a schematic representation of an electric vehicle system 10 comprising an electric vehicle 48. The electric vehicle 48 is embodied as a truck. However, the electric vehicle 48 being a bus or a car would also be conceivable. The electric vehicle 48 has an electric drive train with at least one electric motor 62. Furthermore, the electric vehicle 48 comprises a rechargeable vehicle battery 70.

The electric vehicle system 10 comprises a power supply unit 42. The power supply unit 42 comprises a vehicle charging station 46, where the vehicle battery 70 may be charged via a charging cable (not shown). The vehicle charging station 46 delivers a bi-polar DC input voltage Vᵢₙ at a plug socket 78. A first contact of the plug socket 78 has a positive electric potential with respect to a ground potential V_{g} of a ground 100, for example +750 V, whereas a second contact of the plug socket 78 has a negative electric potential with respect to the ground potential V_{g} with the same absolute value, for example -750 V. Thus, the vehicle charging station 46 may deliver a symmetric DC input voltage Vᵢₙ of 1500 V. However, in other embodiments different symmetric voltages would also be conceivable.

The power supply unit 42 comprises an overhead contact line power system 44 with an overhead contact line system 68 and a contact line power station 80 for supplying the overhead contact line system 68. The overhead contact line system 68 comprises a first contact line 72 and a second contact line 74. The contact line power station 80 delivers a bi-polar DC input voltage Vᵢₙ. The first contact line 72 has a positive electric potential with respect to the ground potential V_{g}, for example +700 V, whereas the second contact line 74 has a negative electric potential with respect to the ground potential V_{g} with the same absolute value, for example -700 V. Thus, the overhead contact line system 68 may deliver a symmetric DC input voltage Vᵢₙ of 1400 V.

However, in other embodiments different symmetric voltages would also be conceivable.

The DC input voltages Vᵢₙ delivered by the vehicle charging station 46 and the contact line power station 80 may be equal, as in the present embodiment, or may be different from each other.

In the present embodiment the electric vehicle 48 is an ERS-vehicle which can power its electric drive train via the vehicle battery 70 or, if locally available, by the overhead contact line system 68. The vehicle battery 70 may also be charged via the overhead contact line system 68. Therefore, the electric vehicle 48 comprises a retractable current collector 76, which is only shown schematically in Figure 1. As is known in the art, the current collector 76 may slide along the contact lines 72, 74 in order to transfer the DC input voltage Vᵢₙ to the electric vehicle 48.

Since the electric vehicle 48 runs on rubber tires 108, there is no intrinsic earthing of a chassis 82 of the electric vehicle 48. This may cause safety hazards in case of an insulation fault when the touchable chassis 82 is connected to components of the electric vehicle 48 and/or the power supply unit 42 that are on high voltage.

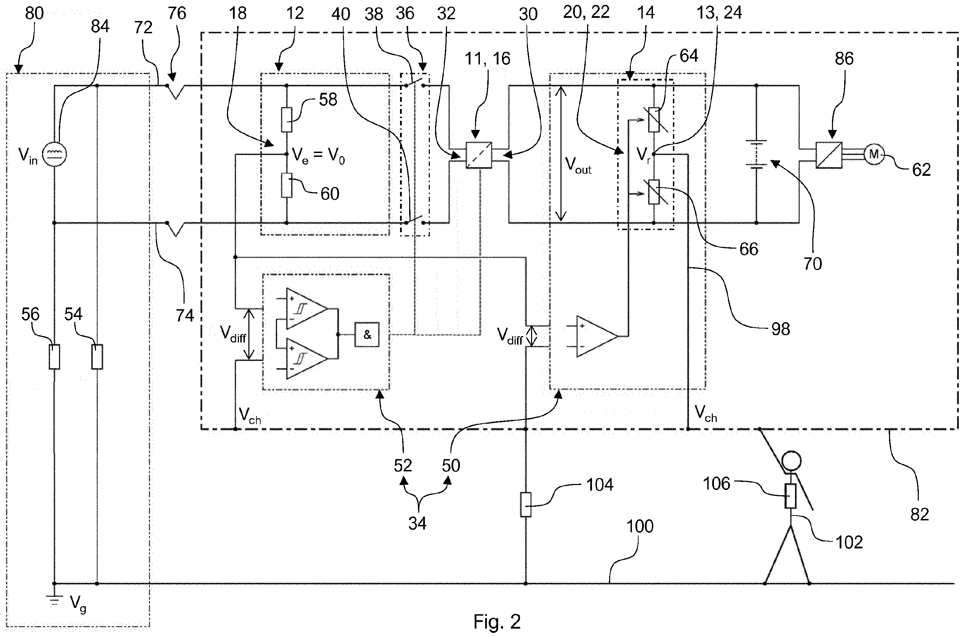

Figure 2 depicts a circuit diagram of parts of the electric vehicle system 10. The figure depicts a person 102 standing on the ground 100 touching the chassis 82. Due to the rubber tires 108 a relatively high equivalent earthing resistor 104 exits. On the other hand, an ohmic resistance of the person's 102 equivalent personal resistor 106, that can be attributed to a living tissue, a clothing and in particular a footwear of the person 102, is usually much smaller than an ohmic resistance of the earthing resistor 104. Thus, in case of an insulation fault when the chassis 82 is on high voltage, a potentially hazardous electric current may flow through the person 102.

This problem can be partly countered by providing a double insulation around components of the electric vehicle 48 that are electrically in contact with the power supply unit 42. However, such solutions are big, heavy and expensive and cannot counter situations, where high voltage parts of the power supply unit 42, for example parts of the overhead contact line system 68, directly connect the chassis 82. The present invention therefore proposes a different approach.

In general terms the idea of the invention is to provide a functional unit 11 configured to provide at least one electrical function, the functional unit 11 being electrically floating and having at least one voltage reference point 13, and to further provide a safety unit 34 configured for actively matching an electric potential V, at the voltage reference point 13 to a target value Vo, the safety unit 34 being configured to trigger an insulation fault event if the matching is impossible.

In the present example the functional unit 11 is a DC/DC-converter 16 with a floating output side 30. However, before coming back to this point, the general setup of the electric vehicle system 10 is described first.

According to figure 2, the contact line power station 80 comprises a voltage supply 84 for delivering the DC input voltage Vᵢₙ. In the current embodiment, the voltage supply 84 delivers a voltage of 1500 V. However, a different voltage is also conceivable. The voltage supply 84 is provided with a high resistance grounding to the ground potential V_{g}. The contact line power station 80 comprises a first grounding resistor 54 and a second grounding resistor 56. A first outlet of the voltage supply 84 is connected to the ground potential V_{g} via the first grounding resistor 54 and a second outlet of the voltage supply 84 is connected to the ground potential V_{g} via the second grounding resistor 56. An electrical resistance is equal for both grounding resistors 54, 56. The electrical resistance of each grounding resistor 54, 56 may be 2 kΩ. The first contact line 72 is connected to the first outlet of the voltage supply 84 and the second contact line 74 is connected to the second outlet of the voltage supply 84.

The vehicle charging station 46 is not shown in figure 2. However, its composition is equivalent to that of the contact line power station 80. Thus, the description regarding the contact line power station 80 is valid for the vehicle charging station 46, too.

The electric vehicle 48 comprises a voltage input unit 12 which receives the DC input voltage Vᵢₙ from the contact lines 72, 74 via the current collector 76 or possibly from the charging station 46.

The electric vehicle 48 comprises a voltage output unit 14 configured to supply a DC output voltage Vₒᵤₜ which is lower than the DC input voltage Vᵢₙ. The DC output voltage Vₒᵤₜ could be 800 V, for example. The DC output voltage Vₒᵤₜ is supplied to the vehicle battery 70 for charging thereof. The DC output voltage Vₒᵤₜ may further be supplied to a DC/AC-converter 86 of the electric vehicle 48 for driving the electric motor 62 in a known fashion.

The electric vehicle system 10 further comprises the non-isolated symmetrical DC/DC-converter 16 which is electrically connected between the voltage input unit 12 and the voltage output unit 14 for converting the DC input voltage Vᵢₙ to the DC output voltage Vₒᵤₜ.

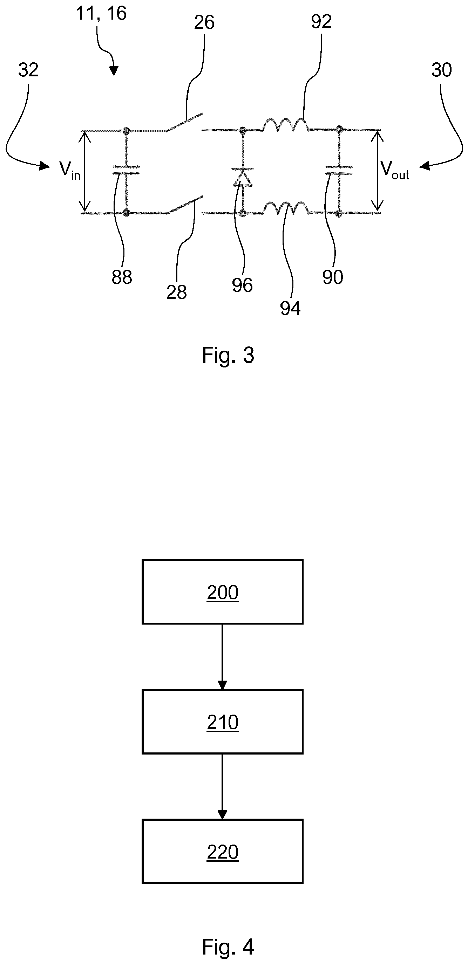

Figure 3 shows a circuit diagram of the non-isolated symmetrical DC/DC-converter 16. The DC/DC-converter 16 comprises a first switching element 26 and a second switching element 28, which together allow a complete electrical separation of the output side 30 of the DC/DC-converter 16 from an input side 32 of the DC/DC-converter 16. The switching elements 26, 28 are solid-state switches, like, for example, MOSFETs.

The DC/DC-converter 16 comprises a first inductance 92 and a second inductance 94 electrically located between two electric input leads on the input side 32 and two electric output leads at the output side 30. Each of the inductances 92, 94 is electrically located between one of the switching elements 26, 28 and the output side 30. Inductance values of the inductances 92, 94 are equal. The inductance value of the inductances 92, 94 may be, for example, 200 µH. Due to the inductances 92, 94 in both lines the output side 30 of the DC/DC-converter 16 is floating and the electric potential V, at the voltage reference point 13 at the output side 30 may be set via the voltage output unit 14 (cf. figure 2 and description below).

The DC/DC-converter 16 comprises stabilizing capacitors 88, 90 between the two electric input leads and the two electric output leads. The capacitance of the capacitors 88, 90 may be equal and may be 100 µF, for example.

The DC/DC-converter 16 comprises a diode 96 electrically connected between the inductances 92, 94. The diode 96 is electrically parallel to the capacitors 88, 90. The diode 96 is oriented so that it is non-conducting if both switching elements 26, 28 are closed.

In operation the switching elements 26, 28 are simultaneously opened and closed. In a closed state of the switching elements 26, 28 an electric current flows through the first switching element 26, the first inductance 92, the second inductance 94 and the second switching element 28. If both switching elements 26, 28 are then opened, the electric current continues flowing through the first inductance 92, the second inductance 94 and the diode 96. This leads to the DC output voltage Vₒᵤₜ being lower than the DC input voltage Vᵢₙ.

In an alternative embodiment the diode 96 could be replaced by a further switching element, which is, in operation, switched alternatingly to the switching elements 26, 28, allowing energy transfer from the vehicle battery 70 to the power supply unit 42.

Returning to figure 2, the voltage input unit 12 is configured to provide an earth potential Vₑ. The voltage input unit 12 comprises an input voltage divider 18 having a first input divider resistor 58 and a second input divider resistor 60. An electrical resistance is equal for both input divider resistors 58, 60. The electrical resistance of each input divider resistor 58, 60 may be 1 MΩ. The input voltage divider 18 is configured to provide the earth potential Vₑ as a virtual earth potential. Since the DC input voltage Vᵢₙ and the input voltage divider 18 are both symmetrical, the earth potential Vₑ essentially equals the ground potential V_{g}. Thus, although no grounding connection is present, a virtual ground potential is nonetheless available.

The voltage output unit 14 comprises a chassis ground potential setting unit 20 for variably setting a chassis ground potential V_{ch} of the chassis 82. Herein, the chassis ground potential V_{ch} equals the abovementioned electric potential V, at the voltage reference point 13 as the reference point 13 is electrically connected to the chassis 82 via a line 98. The chassis ground potential setting unit 20 comprises a variable output voltage divider 22 whose center tab 24 is connected to the chassis 82 via the line 98. Herein, the center tab 24 is the reference point 13.

The variable output voltage divider 22 comprises a first output divider resistor 64 and a second output divider resistor 66, wherein between these two the center tab 24 is located. The output divider resistors 64, 66 may be implemented as variable ohmic resistors, as shown in figure 2. Alternatively, they may be implemented using at least one switch for each of the variable output divider resistors 64, 66. These switches may be solid-state switches. A switching duty cycle of the switches may be controlled to set an equivalent electrical resistance.

The electric vehicle 48 comprises the safety unit 34 for actively matching the electric potential V, at the voltage reference point 13, and thus the chassis ground potential V_{ch}, to the target value V₀, the safety unit 34 being configured to trigger an insulation fault event if the matching is impossible. The safety unit 34 uses the earth potential Vₑ provided by the voltage input unit 12 as the target value V₀.

The safety unit 34 comprises a balancing circuit 50 which is configured to match the chassis ground potential V_{ch} to the earth potential Vₑ by controlling the output voltage divider 22 of the chassis ground potential setting unit 20. The balancing unit 50 is configured to minimize a potential difference V_{diff} between the chassis ground potential V_{ch} and the earth potential Vₑ.

The safety unit 34 comprises a comparator circuit 52 which is configured to interrupt an electrical connection between the voltage input unit 12 and the voltage output unit 14 if the potential difference V_{diff} between the earth potential Vₑ and the chassis ground potential V_{ch} exceeds a safety threshold, for example of 30 V. In this case the matching of the chassis ground potential V_{ch} to the earth potential Vₑ was impossible and the insulation fault event is triggered, as it is to be assumed that an insulation fault happened somewhere in or outside the electric vehicle 48. Thereupon the electric connection between the voltage input unit 12 and the voltage output unit 14 is interrupted for safety reasons, in particular to prevent high voltages between the chassis 82 and the ground 100.

The comparator circuit 52 is configured to immediately and simultaneously open the first switching element 26 and the second switching element 28 of the DC/DC-converter 16 if the insulation fault event is triggered, in order to interrupt the electrical connection between the voltage input unit 12 and the voltage output unit 14. As the switching elements 26, 28 are solid-state switches, they can be opened within just 10 ms.

In order to further improve safety, the electric vehicle 48 comprises a disconnection unit 36 electrically connected between the voltage input unit 12 and the DC/DC-converter 16. The disconnection unit 36 has a first disconnector 38 and a second disconnector 40, thus one disconnector 38, 40 for each of the two electric input leads of the DC/DC-converter 16. The disconnectors 38, 40 are normally open (NO) disconnectors. They are kept closed by the comparator circuit 52 during normal operation and opened upon triggering the insulation fault event. The disconnectors 38, 40 are relays which react slower than the switching elements 26, 28.

In an alternative embodiment, the safety unit 34 may be integrated in a microcontroller unit of the electric vehicle 48 without any separation of a balancing circuit 50 and a comparator circuit 52. This allows implementation of several different safety thresholds for different conditions. For example, a lower safety threshold could be put in place if the electric vehicle 48 is stationary. A higher safety threshold could be used if the electric vehicle 48 is moving.

Figure 4 shows a flow diagram of a generalized method for operating the electric vehicle system 10. Therein, in a step 200 the functional unit 11 provides at least one electrical function. The functional unit 11 is electrically floating and has the voltage reference point 13. In a step 210 the electric potential V, at the voltage reference point 13 is actively matched to the target value V₀. In a Step 220 the insulation fault event is triggered if the matching is impossible.

### Reference Numerals

- 10: electric vehicle system
- 11: functional unit
- 12: voltage input unit
- 13: voltage reference point
- 14: voltage output unit
- 16: DC/DC-converter
- 18: input voltage divider
- 20: chassis ground potential setting unit
- 22: output voltage divider
- 24: center tab
- 26: first switching element
- 28: second switching element
- 30: output side
- 32: input side
- 34: safety unit
- 36: disconnection unit
- 38: first disconnector
- 40: second disconnector
- 42: power supply unit
- 44: overhead contact line power system
- 46: vehicle charging station
- 48: electric vehicle
- 50: balancing circuit
- 52: comparator circuit
- 54: first grounding resistor
- 56: second grounding resistor
- 58: first input divider resistor
- 60: second input divider resistor
- 62: electric motor
- 64: first output divider resistor
- 66: second output divider resistor
- 68: overhead contact line system
- 70: vehicle battery
- 72: first contact line
- 74: second contact line
- 76: current collector
- 78: plug socket
- 80: contact line power station
- 82: chassis
- 84: voltage supply
- 86: DC/AC-converter
- 88: capacitor
- 90: capacitor
- 92: first inductance
- 94: second inductance
- 96: diode
- 98: line
- 100: ground
- 102: person
- 104: earthing resistor
- 106: personal resistor
- 108: rubber tire
- 200: step
- 210: step
- 220: step
- Vᵣ: electric potential
- V₀: target value
- Vᵢₙ: DC input voltage
- Vₒᵤₜ: DC output voltage
- Vₑ: earth potential
- V_{ch}: chassis ground potential
- V_{g}: ground potential
- V_{diff}: potential difference

## Claims

1. Electric vehicle system (10) comprising:
- a functional unit (11) configured to provide at least one electrical function, in particular a DC/DC-converter (16), the functional unit (11) being electrically floating and having at least one voltage reference point (13); and
- a safety unit (34) configured for actively matching an electric potential (Vᵣ) at the voltage reference point (13) to a target value (V₀), the safety unit (34) being configured to trigger an insulation fault event if the matching is impossible.

2. Electric vehicle system (10) in particular according to claim 1, comprising:
- a voltage input unit (12) configured to be connected to a bi-polar, preferably symmetrical, DC input voltage (Vᵢₙ);
- a voltage output unit (14) configured to supply a DC output voltage (Vₒᵤₜ) which is different from the DC input voltage (Vᵢₙ); and
- a symmetrical DC/DC-converter (16), in particular being the functional unit (11), electrically connected between the voltage input unit (12) and the voltage output unit (14) for converting the DC input voltage (Vᵢₙ) to the DC output voltage (Vₒᵤₜ).

3. Electric vehicle system (10) according to claim 2,
wherein the voltage input unit (12) is configured to provide an earth potential (Ve).

4. Electric vehicle system (10) according to claim 3,
wherein the voltage input unit (12) comprises an input voltage divider (18), preferably a symmetrical input voltage divider (18), configured to provide the earth potential (Vₑ) as a virtual earth potential.

5. Electric vehicle system (10) according to any one of claims 2 to 4,
wherein the voltage output unit (14) comprises a chassis ground potential setting unit (20) for variably setting a chassis ground potential (V_{ch}).

6. Electric vehicle system (10) according to claim 5,
wherein the chassis ground potential setting unit (20) comprises a variable output voltage divider (22) whose center tab (24) is connected to the chassis ground potential (V_{ch}).

7. Electric vehicle device (10) according to any one of the preceding claims,
wherein the DC/DC-converter (16) comprises at least one first switching element (26) and at least one second switching element (28), which together allow a complete electrical separation of an output side (30) of the DC/DC-converter from an input side (32) of the DC/DC-converter.

8. Electric vehicle system (10) at least according to claims 1, 3 and 5,
wherein the electric potential (Vᵣ) at the voltage reference point (13) is the chassis ground potential (V_{ch}) and the target value (Vo) is the earth potential (Vₑ).

9. Electric vehicle system (10) according to claim 8,
wherein the safety unit (34) is configured to match the chassis ground potential (V_{ch}) to the earth potential (Vₑ) by controlling the chassis ground potential setting unit (20), preferably the output voltage divider (22).

10. Electric vehicle system (10) according to claim 8 or 9,
wherein the safety unit (34) is configured to interrupt an electrical connection between the voltage input unit (12) and the voltage output unit (14) if the difference between the earth potential (Vₑ) and the chassis ground potential (V_{ch}) exceeds at least one safety threshold.

11. Electric vehicle system (10) according to claim 10,
wherein the safety unit (34) is configured to open at least one switching element (26, 28) of the DC/DC-converter (16), preferably the first switching element (26) and the second switching element (28), in order to interrupt the electrical connection.

12. Electric vehicle system (10) according to claim 10 or 11, comprising:
- a disconnection unit (36) electrically connected between the voltage input unit (12) and the DC/DC-converter (16),
wherein the safety unit (34) is configured to open at least one disconnector (38, 40), preferably a first disconnector (38) and a second disconnector (40), of the disconnection unit (36) in order to interrupt the electrical connection.

13. Electric vehicle system (10) according to any one claims 2 to 12, comprising:
- a power supply unit (42) configured to provide the bi-polar, preferably symmetrical, DC input voltage (Vᵢₙ).

14. Electric vehicle system (10) according to claim 13,
wherein the power supply unit (42) comprises an overhead contact line power system (44), a vehicle charging station (46), an Electric Road System, a high voltage fuel cell and/or a high voltage battery.

15. Electric vehicle (48), in particular ERS-truck and/or ERS-bus, comprising or being part of an electric vehicle system (10) according to any one of the preceding claims.

16. Method for operating an electric vehicle system (10), in particular according to any one of claims 1 to 14,
wherein a functional unit (11) providing at least one electrical function is electrically floating and has at least one voltage reference point (13),
wherein an electric potential (Vᵣ) at the voltage reference point (13) is actively matched to a target value (V₀), and
wherein an insulation fault event is triggered if the matching is impossible.
